## Europäisches Patentamt
## European Patent Office
## Office européen des brevets

(19)

(11) Veröffentlichungsnummer: **0 075 107**
**B1**

(12) **EUROPÄISCHE PATENTSCHRIFT**

(45) Veröffentlichungstag der Patentschrift:
09.04.86

(21) Anmeldenummer: 82107328.5

(22) Anmeldetag: 12.08.82

(51) Int. Cl.⁴: **G 02 B 5/30**

(54) Optischer Isolator.

(30) Priorität: 21.09.81 DE 3137442

(43) Veröffentlichungstag der Anmeldung:
30.03.83 Patentblatt 83/13

(45) Bekanntmachung des Hinweises auf die Patenterteilung:
09.04.86 Patentblatt 86/15

(84) Benannte Vertragsstaaten:
CH FR GB LI

(56) Entgegenhaltungen:
FR - A - 2 246 882
GB - A - 605 489
NL - A - 7 015 975

OPTIK 38, Heft 2, Juli 1973, Seiten 187-195 H.F.
MAHLEIN et al.: "Ein kontinuierlich einstellbarer
Laserstrahl-Abschwächer aus dielektrischen
Vielfachschichten"
APPLIED OPTICS, Band 8, Nr. 10, Oktober 1969, Seiten
1965-1974 P.B. CLAPHAM et al.: "Some applications of
thin films to polarization devices"
APPLIED OPTICS, Band 20, Nr. 1, Januar 1981, Seiten
111-116 J.A. DOBROWOLSKI et al.: "High-performance
thin film polarizer for the UV and visible spectral
regions"
APPLIED OPTICS, Band 8, Nr. 5, Mai 1969, Seite 1068 T.

(73) Patentinhaber: Siemens Aktiengesellschaft, Berlin und
München Wittelsbacherplatz 2, D-8000 München 2 (DE)

(72) Erfinder: Mahlein, Hans, Dr.rer.nat., Queristrasse 2,
D-8025 Unterhaching (DE)

(56) Entgegenhaltungen: (Fortsetzung)
SHULTZ: "A low loss polarizing prism"
IEEE Journ. of Quant. Electronics, Vol. QE-16, No. 1,
Janv. 1980, P. 11-22

# 0 075 107

**Beschreibung**

Die vorliegende Erfindung betrifft einen optischen Isolator nach dem Oberbegriff des Patentanspruchs 1.

Ein optischer Isolator der genannten Art ist aus K.Kobayashi, M. Seki: Microoptic Grating Multiplexers and Optical Isolators for a Fiber Optic Communications" 5 in IEEE Jorun. of Quant. Electron., Vol. QE-16, No. 1, Jan. 1980, S. 11-22, insbesondere ab S. 16 bekannt. Derartige optische Isolatoren, die nichtreziproke optische Bauelemente sind, werden in der Glasfasernachrichtentechnik benötigt, wenn der durch Reflexion an Inhomogenitäten, beispielsweise Stoßstellen, etwa in Steckern oder Spleißstellen, verursachte, rückwärts laufende optische Leistungsfluß stört. Dies ist beispielsweise bei Laserdioden der Fall. Durch die störende Rückkopplung treten in der Laseremission Instabilitäten auf, die zu erhöhtem Rauschen und einer Änderung der spektralen Emission führen.

Ein Problem bei der praktischen Realisierung eines Isolators der genannten Art ist die Rückreflexion am vorgeschalteten optischen Polarisator, der dem Sender gegenüberliegt. Selbst gute Reflexschichten auf den Poarisatoroberflächen sind hier nicht ausreichend.

Außerdem ist aus der Figur 13 auf Seite 17 der obengenannten Druckschrift zu erkennen, daß vom Faraday-Dreher eine zur Polarisationsrichtung der einfallenden Strahlung senkrecht polarisierte Strahlung zum vorgeschalteten Polarisator zurückgestrahlt werden kann. Ein idealer vorgeschalteter optischer Polarisator wäre für diese vom Faraday-Dreher zurückgestrahlte Strahlung undurchlässig. In der Praxis läßt sich dieses Ideal jedoch nur annähernd erreichen. Es wird daher in der Praxis immer ein geringfügiger Anteil der vom Faraday-Dreher zurückgestrahlten Strahlung durch den vorgeschalteten Polarisator hindurchgehen.

Aufgabe der vorliegenden Erfindung ist es, einen optischen Isolator der eingangs genannten Art anzugeben, dessen vorgeschalteter optischer Polarisator für linear polarisierte Strahlung, wie sie beispielsweise von einer Laserdiode emittiert wird, reflexionsfrei ist, und der die Lichtquelle auch gegen die vom Faraday-Dreher rückgestrahlte und zur einfallenden linear polarisierten Strahlung senkrecht polarisierte Strahlung relativ gut abschirmt.

Diese Aufgabe wird durch die im kennzeichnenden Teil des Patentanspruchs 1 angegebenen Merkmale gelöst.

Der durch diese Lösung gegebene Polarisator ist neu. Es sei an dieser Stelle aber darauf hingewiesen, daß aus Optik 38, Heft 2, 1973, S. 187-195 bereits ein Polarisator bekannt ist, der sich von dem erfindungsgemäßen Polarisator nur dadurch unterscheidet, daß sowohl der Eintrittswinkel der Strahlung als auch der Austrittswinkel 0° beträgt, und daß sowoh1 auf der Strahlungseintrittsfläche als auch auf der Strahlungsaustrittsfläche reflexmindernde Schichten aufgebracht sind.

Aus Appl. Optics, Vol. 8, No. 5, Mai 1969, S. 1068 geht ebenfalls ein optischer Polarisator hervor, der sich von dem erfindungsgemäßen Polarisator nur dadurch unterscheidet, daß anstelle einer dielektrischen Vielfachschicht eine Luftschicht verwendet ist. Es wird jedoch ausdrücklich darauf hingewiesen, daß bei Anwendung des Brewsterwinkels bezüglich der Strahlungseintrittssfläche als auch der Strahlungsaustrittsfläche eine reflexionsmindernde Schicht überflüssig wird.

Aus der FR-A-2 246 882 geht bereits das Merkmal hervor, daß die Brechzahl der transparenten Körper gleich der Brechzahl einer niedriger brechenden Schicht der dielektrischen Vielfachschicht gewählt ist.

In diesen drei letztgenannten Druckschriften fehlt jedoch jeglicher Hinweis auf einen optischen Isolator.

Die erfindungsgemäße Lösung beruht auf der Erkenntnis, daß die Verwendung des Brewsterwinkels bezüglich der Strahlungseintrittsfläche und der Strahlungsaustrittsfläche des vorgeschalteten optischen Polarisators hinsichtlich der Unterdrückung der Rückreflexion der einfallenden Strahlung überlegen ist, und daß zudem die vom Faraday-Dreher zurückgestrahlte Strahlung an der unter diesem Winkel angeordneten Strahlungsaustrittsfläche maximal reflektiert wird und dadurch nur ein minimaler Anteil dieser Strahlung in den Polarisator eindringen kann.

Bevorzugte und vorteilhafte Ausgestaltungen eines er-findungsgemäßen optischen Isoltors gehen aus den Unteransprüchen 2 bis 4 hervor.

Die Erfindung wird anhand der Figuren in der nun folgenden Beschreibung näher erläutert. Von den Figuren zeigen:

Figur 1 in schematischer Darstellung einen ersten Typ eines reflexionsfreien dem Faraday-Drehet des optischen Isolators vorgeschalteten Polarisator und

Figur 2 einen zweiten Typ eines solchen reflexionsfreien Polarisators.

Es werden zunächst anhand des aus Optik 38 (1973) S. 187 hervorgehenden und eingangs kurz beschriebenen Polarisationsstrahlteilers die verschiedenenen Anteile des Restreflexionsvermögens $R_p$ für parallel zur Einfallsebene polarisierte Strahlung analysiert und dann gezeigt, wie der erwünschte Wert $R_p = 0$ erreicht werden kann, d.h. wie die störende Rückwirkung des Polarisators auf den Strahlungssender vermieden wird. Wie in IEEE J. Quant. Electr. QE-16 (1980) s 11-22 wird angenommen, daß die Strahlung als ein Parallelstrahlenbündel auf den Polarisator trifft.

Das unerwünschte Reflexionsvermögen $R_p$ setzt sich aus vier Anteilen zusammen:

1) Reflexion an der Strahlungseintrittsfläche des den vorgeordneten transparenten Körper bildenden einen Prismas, die eine Grenzfläche Luft - Glas ist,

2) Reflexion an der Grenzfläche zwischen dem einen Prisma und der Vielfachschicht,

3) Reflexion an der Grenzfläche zwischen der letzten Schicht der Vielfachschicht und dem den nachgeordneten transparenten Körper bildenden anderen Prisma, und

4) Reflexion an der Strahlungsaustrittsfläche des anderen Prismas, die eine Glas - Luft - Grenzfläche darstellt.

2

Während die unter 1) und 4) genannten Anteile unabhängig von der Wellenlänge sind, interferieren die unter 2) und 3) genannten Anteile und hängen somit von der Wellenlänge ab. Im Wellenzahlmaßstab erhält man für die unter 2) und 3) genannten Anteile einen streng periodischen Verlauf (siehe Optik 38 (1973) S. 187). Die Periodenlänge hängt von der Anzahl der Schichten ab. Bezüglich weiterer Details, die sich auf die Interferenz der unter 2) und 3) genannten Anteile beziehen, darf auf Optik 38 (1973) S. 187 verwiesen werden.

Um den erwünschten Wert $R_p = 0$ zu erzielen, werden folgende Maßnahmen vorgenommen:

a) Die Brechzahl $n_G$ der beiden Prismen aus Glas wird gleich der Brechzahl $n_L$ der niedriger brechenden Schichten gewählt, d.h.:

$$n_G = n_L.$$

In diesem Fall ist auch an den Grenzflächen zwischen den Prismen und der ersten bzw. letzten Schicht der Vielfachschicht die Brewster-Bedingung erfüllt, womit die unter 2) und 3) genannten Störanteile zu null werden.

b) Sowohl der Eintrittswinkel der Strahlung an der Strahlungseintrittsfläche als auch der Austrittswinkel an der Strahlungsaustrittsfläche wird gleich dem Brewster-Winkel gewählt, der gegeben ist durch

$$\arc \tan (n_L/n_0),$$

worin $n_0$ den niedrigen Brechungsindex des an die Strahlungseintrittsfläche bzw. die Strahlungsaustrittsfläche grenzenden Mediums, hier speziell Luft, bedeutet. Damit sind auch die unter 1) und 4) genannten Störanteile beseitigt und es resultiert

$$R_p = 0.$$

Für den Prismenwinkel $\Theta_p$, den die Strahlungseintrittsfläche bzw. die Stahlungsaustrittsfläche mit der parallel zu den Oberflächen der Vielfachschicht verlaufenden Hypotenusenfläche einschließt, ergeben sich aus den genannten Bedingungen a) und b) zwei Lösungen.

**1. Lösung:**

$$\Theta_p = \arc \tan (n_H/n_L) + \arc \tan (n_0/n_L)$$

**2 Lösung:**

$$\Theta_p = \arc \tan (n_H/n_L) - \arc \tan (n_0/n_L).$$

Die Schichtdicke $t_H$ der höher brechenden Schichten mit der Brechzahl $n_H$ und die Schichtdicke $t_L$ der niedriger brechenden Schichten werden so gewählt, daß ihre effektiven optischen Schichtdicken gleich einem Viertel der Strahlungswellenlänge $\lambda_0$ sind. In Kombination mit der Brewster-Bedingung für die Grenzfläche zwischen einer höher brechenden Schicht und einer niedriger brechenden Schicht folgen aus Optik 38 (1973) S. 187 zu:

$$t_H = \frac{\lambda_0}{4} \frac{\sqrt{n_H^2 + n_L^2}}{n_H^2} \quad , \quad t_L = \frac{\lambda_0}{4} \frac{\sqrt{n_H^2 + n_L^2}}{n_L^2}$$

Das Spitzenreflexionsvermögen $R_S$ für die s-Komponente nimmt mit wachsender Anzahl m der Schichten zu und folgt aus H.A. Macleod, Thin Film Optical Filters (Adam Hilger Ltd. London, 1969) S. 301 zu:

$$R_S = \left[ \frac{n_G^2 \cos^2 \Theta_G - n_H^2 \cos^2 \Theta_H (n_H/n_L)^{2(m-1)}}{n_G^2 \cos^2 \Theta_G + n_H^2 \cos^2 \Theta_H (n_H/n_L)^{2(m-1)}} \right]^2$$

Unter der Bedingung $n_G = n_L$ ergibt sich daraus

$$R_S = \left[ \frac{1 - (n_H/n_L)^{2(m+1)}}{1 + (n_H/n_L)^{2(m+1)}} \right]^2$$

Für die Sperrbereichsbreite der s-Komponente gilt im normierten Wellenzahlmaßstab

$g = \lambda_0/\lambda$

die in Optik 38 (1973) S. 187 angegebene Formel

$$2\Delta g = \frac{4}{\pi} \arc \sin \frac{(n_H/n_L)^2 - 1}{(n_H/n_L)^2 + 1}$$

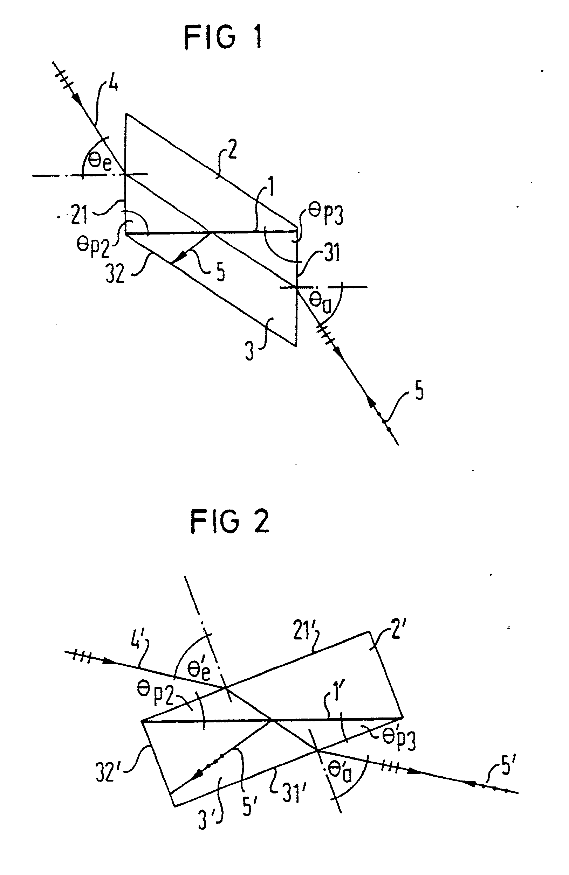

In den Figuren 1 und 2 sind zwei Beispiele für derartig rückwirkungsfreie Polarisatoren angegeben, wobei der in Figur 1 dargestellte Polarisator der obengenannten ersten Lösung entspricht, während der Polarisator gemäß Figur 2 der genannten zweiten Lösung entspricht.

In den Figuren ist die dünne Vielfachschicht 1 bzw. 1' nur als ein die beiden Glasprismen 2 und 3 bzw. 2' und 3' trennender Strich dargestellt. Die Vielfachschicht besteht in (Virklichkeit aus einem Wechselschichtsystem aus einer Anzahl von SiO₂- und TiO₂-Schichten. VJechselschichtsystem bedeutet, daß jeweils zwischen zwei benachbarten Schichten der einen Art eine Schicht der anderen Art liegt.

Die $SiO_2$-Schicht ist die niedriger brechende Schicht und ihr Brechungsindex ist gegeben durch $n_L = 1,5$. Die $TiO_2$-Schicht ist die höherbrechende Schicht und ihr Brechungsindex ist gegeben durch $n_H = 2,1$.

Da der Brechungsindex $n_G$ des Prismenmaterials gleich dem Brechungsindex $n_L$ der niedriger brechenden Schicht sein muß, müssen die Prismen 2 und 3 bzw. 2' und 3' und damit auch ein zum Verkitten verwendeter optischer Kitt einen Brechungsindex $n_G = 1,5$ aufweisen.

Mit diesen Werten ergibt sich aus der ersten Lösung der Winkel $\Theta_{P2}$ zwische der Strahleintrittsfläche 21 des einen Prismas 2 und einer Oberflärde der Vielfachschicht 1 zu $\Theta_{P2} = 88,15°$. Entsprechend ist der Winkel $\Theta_{P3}$ zwischen der Strahlungsaustrittsfläche 31 des anderen Prismas 3 und einer Oberfläche der Vielfachschicht 1 gleich $\Theta = 88,15°$

Aus der zweiten Lösung ergibt sich der Winkel $\Theta_{P2}'$ zwischen der Strahlungseintrittsfläche 21' des einen Prismas 2' und der einen Oberfläche der Vielfachschicht 1 zu $\Theta_{P2}' = 20,77°$ Entsprechend ist der Winkel $\Theta_{P3}'$ zwischen der Strahlungsaustrittsfläche 31' des anderen Primsas 3 und der einen Oberfläche der Vielfachschicht 1' gleich $\Theta_{P3}' = 20,77°$.

Die Polarisatoren gemäß den Figuren 1 und 2 sind so dargestellt, daß die Einfallsebene der einfallenden Strahlung parallel zur Zeichenebene ist. Jeder der dargestellten Polarisatoren ist für einen parallel zur Einfallsebene und damit zur Zeichenebene linear polarisierten Lichtstrahl 4 bzw. 4' dann reflexionsfrei, wenn dieser Strahl die Strahlungseintrittsfläche 21 bzw. 21' unter einem zu deren Lot hin gemessenen Einfallswinkel b von 56,31° trifft. Der Strahl tritt aus der Strahlungsaustrittsfläche 31 bzw. 31' unter einem zu deren Lot hin gemessenen Winkel $\Theta a$ bzw. $\Theta_a'$ aus, der ebenfalls 56, 31° beträgt.

Der aus der Lichtaustrittsfläche 31 bzw. 31' ausgetretene Strahl wird dem Faraday-Dreher zugeführt. Der von diesem zurückkommende, senkrecht zur Einfallsebene polarisierte Strahl 5 bzw. 5' dringt zum geringen Teil worin das andere Prisma 3 bzw. ein mol wird von der Vielfachschicht 1 bz w. 1' reflektiert. Zweck-mäßigerweise wird die Fläche 32 bzw. 32' des Prismas 3 bzw. 3', auf die ein von der Vielfachschicht 1 bzw. 1' reflektierter Anteil des Strahls 5 bzw. 5' trifft, schwarz lackiert oder anderweitig mit einem Lichtabsorber versehen. Auch kann eine zusätzliche seitliche Abschrägung unter dem Brewster-Winkel vorgesehen sein, um einen solchen Strahl austreten zu lassen.

Die folgende Tabelle zeigt die Abhangigkeit es Spitzenreflexionsvermögens oder maximalen Reflexionsvermögens $R_s$ in Abhängigekeit von der Schichten der Vidfahrschicht

**0 075 107**

| m | $R_s$ |
|---|---|
| 1 | 0,3445 |
| 3 | 0,7623 |
| 5 | 0,9319 |
| 7 | 0,9818 |
| 9 | 0,9952 |
| 11 | 0,9988 |
| 13 | 0,9997 |
| 15 | 0,9999 |
| 17 | 1,0000 |

Aus der Tabelle geht hervor, daß eine Schichtanzahl m = 13 ausreichend ist.

In der Praxis erreicht ein Vielfachschichtsystem ein maximales Reflexionsvermögen von $R_s \geq$ 0'9908 Dies bedeutet jedoch nicht daß das Transmissionsvermogen $T_s$ einen Wert von 1 - 0,998 = 0,002 aufweist. In Wirklichkeit ist das Transmissionsvermögen weit geringer als 0,002, da zum weitaus überwiegenden Anteil Streuung und Absorption den Anteil von 0,002 ausmachen. Da die Streuung weitgehend isotrop erfolgt, ist ihre Rückwirkung auf den Sender, beispielsweise eine Laserdiode, vernachlässigbar. Aus der oben zuletzt angegebenen Formel für die Sperrbereichsbreite folgt für eine Wellenlänge $\lambda_0$ = 800 nm eine Sperrbereichsbreite von etwa 300 nm. Schwankungen der Laserwellenlänge $\lambda_0$ beeinträchtigen deshalb die Funktionsweise des Polarisators nicht.

**Patentansprüche**

1. Optischer Isolator, bestehend aus einem Faraday-Dreher, einem in Strahlungseinfallsrichtung dem Faraday-Dreher vorgeschalteten optischen Polarisator und einem dem Faraday-Dreher nachgeschalteten optischen Polarisator, dadurch gekennzeichnet daß der vorgeschaltete optische Polarisator aus zwei transparenten Körpern (2, 3; 2', 3') und einer dazwischen angeordneten, abwechselnd höher und niedriger brechende Schichten aufweisenden dielektrischen Vielfachschicht (1; 1') besteht, an welche die transparenten Körper (2, 3; 2', 3'), deren Brechzahl gleich der Brechzahl einer niedriger brechenden Schicht gewählt ist, grenzen, und daß sowohl der Eintrittswi'nkel ($\Theta_e; \Theta_e'$) der Strahlung an einer an ein Medium mit relativ niedrigem Brechungsindex grenzenden Strahlungseintrittsfläche (21; 21') des der Vielfachschicht (1; 1') in Strahlungseinfallsrichtung vorgeordneten transparenten Körpers (2; 2') als auch der Austrittswinkel ($\Theta_a; \Theta_a'$) der Strahlung an einer dem Faraday-Dreher zugekehrten und ebenfalls an ein Medium mit relativ niedrigem Brechungsindex grenzenden Strahlungsaustrittsfläche (31; 31') des der Vielfachschicht (1; 1') nachgeordneten transparenten Körpers (3; 3') gleich dem Brewsterwinkel gewählt ist.

2. Isolator nach Anspruch 1, dadurch gekennzeichnet, daß die Schichtdicke einer höher brechenden Schicht der dielektrischen Vielfachschicht (1; 1') gleich

$$t_H = \frac{\lambda_0}{4} \cdot \frac{\sqrt{n_H^2 + n_L^2}}{n_H^2}$$

und die Schichtdicke einer niedriger brechenden Schicht einer Vielfachschicht (1; 1') gleich

5

# 0 075 107

$$t_L = \frac{\lambda 0}{4} \cdot \frac{\sqrt{n_H^2 + n_L^2}}{n_L^2}$$

gewählt ist, wobei $n_H$ die Brechzahl einer höher brechenden Schicht, $n_L$ die Brechzahl einer niedriger brechenden Schicht und $\lambda_0$ die Wellenlänge der einfallenden Strahlung bedeuten.

3. Isolator nach Anspruch 1 oder 2, <u>dadurch gekennzeichnet</u>, daß eine niedriger brechenden Schicht der Vielfachschicht (1; 1') aus $SiO_2$ und eine höher brechende Schicht aus $TiO_2$ besteht.

4. Polarisator nach einem der vorhergehenden Ansprüche, insbesondere nach Anspruch 3, <u>dadurch gekennzeichnet</u>, daß die Vielfachschicht (1; 1') aus mindestens 13 Schichten besteht.

## Claims:

1. An optical isolator consisting of a Faraday rotator, an optical polarizer preceding the Faraday rotator in the direction of incidence of the radiation, and an optical polarizer which follows the Faraday rotator, <u>characterised in that</u> the preceding optical polarizer consists of two transparent bodies (2, 3; 2', 3') and an intermediate dielectric multiple layer (1, 1') which has alternately high and low refractive layers and to which the adjacent transparent bodies (2, 3: 2', 3'), whose refractive index is selected to correspond to the refractive index of a low refractive layer, and that both the angle of contact ($\Theta_e$; $\Theta_e'$) of the radiation on a radiation input surface (21; 21') adjacent to a medium of a relatively low refractive index on the transparent body (2; 2') which precedes the multiple layer (1; 1') in the direction of incidence of the radiation, and also the angle of emergence of the radiation ($\Theta_a$; $\Theta_a'$) on a radiation output surface (31; 31') of the transparent body (3; 3') which follows the multiple layer (1; 1') facing the Faraday rotator and adjacent to a medium of a relatively low refractive index, each correspond to the Brewster angle.

2. An isolator as claimed in Claim 1, <u>characterised in that</u> the layer thickness of a high refractive layer of the dielectric multiple layer (1; 1') equals

$$t_H = \frac{\lambda 0}{4} \cdot \frac{\sqrt{n_H^2 + n_L^2}}{n_H^2} \quad ;$$

and the layer thickness of a low refractive layer of a multiple layer (1; 1') equals

$$t_L = \frac{\lambda 0}{4} \cdot \frac{\sqrt{n_H^2 + n_L^2}}{n_L^2} \quad ;$$

where $n_H$ represents the refractive index of a high refractive layer;
$n_L$ represents the refractive index of a low refractive layer; and $\lambda 0$ represents the wavelength of the incident radiation.

3. An isolator as claimed in Claim 1 or 2, <u>characterised in that</u> a low refractive layer of the multiple layer (1; 1') consists of $SiO_2$ and a high refractive layer consists of $TiO_2$.

4. A polarizer as claimed in one of the preceding Claims, in particular as claimed in Claim 3, <u>characterised in that</u> the multiple layer (1; 1') consists of at least 13 layers.

## Revendications

1. Isolateur optique, constitué par un rotateur de Faraday, par un polariseur optique monté en amont du rotateur de Faraday suivant la direction d'incidence du rayonnement et par un polariseur optique monté en aval du rotateur de Faraday, caractérisé par le fait que le polariseur optique monté en amont est constitué par deux corps transparents (2,3; 2',3') et par une couche diélectrique multiple (1; 1') disposée entre les deux corps et possédant des couches alternativement plus réfringentes et moins réfringentes et que jouxtent les corps transparents (2,3; 2',3') dont les indices de réfraction sont choisis égaux à l'indice de réfraction d'une couche moins réfringente, et qu'aussi bien l'angle d'incidence ($\Theta_e$; $\Theta_e$) du rayonnement sur une surface de pénétration du rayonnement (21; 21'), jouxtant un milieu possédant un indice de réfraction relativement faible, du corps

6

transparent (2; 2') disposé en amont de la couche multiple (1: 1') suivant la direction d'incidence du rayonnement, que l'angle de sortie ($\Theta_a$; $\Theta_a$) du rayonnement au niveau d'une surface de sortie du rayonnement (31,31'), tournée vers le rotateur de Faraday et jouxtant egalement un milieu possédant un indice de réfraction relativement faible, les corps transparents (3; 3') disposés en aval de la couche multiple (1; 1'), sont choisis égaux à l'angle de Brewster.

2. Isolateur suivant la revendication 1, caractérisé par le fait que l'épaisseur d'une couche plus réfringente de la couche diélectrique multiple (1; 1') est choisie égale à

$$t_H = \frac{\lambda_0}{4} \frac{\sqrt{n_H^2 + n_L^2}}{n_H^2}$$

et que l'épaisseur d'une couche moins réfringente d'une couche multiple (1; 1') est choisie égale à

$$t_L = \frac{\lambda_0}{4} \frac{\sqrt{n_H^2 + n_L^2}}{n_L^2}$$

$n_H$ étant l'indice de réfraction d'une couche plus réfringente, $n_L$ l'indice de réfraction d'une couche moins réfringente et $\lambda_0$ la longueur d'onde du rayonnement incident.

3. Isolateur suivant la revendication 1 ou 2, caractérisé par le fait qu'une couche moins réfringente de la couche multiple (1; 1') est constituée par du $SiO_2$ et qu,une couche plus réfringente est constituée par du $TiO_2$.

4. Polariseur suivant l'une des revendications précédentes, notamment la revendication 3, caractérisé par le fait que la couche multiple (1; 1') est constituée par au moins 13 couches.

FIG 1

FIG 2

0 075 107

1